# EUROPÄISCHE PATENTSCHRIFT

(11) **EP 1 564 464 B1**
(45) Veröffentlichungstag und Bekanntmachung des Hinweises auf die Patenterteilung: **19.04.2006**
(21) Anmeldenummer: 04002968.8
(22) Anmeldetag: 11.02.2004
(51) Int. Cl.: F16K 31/00

(54) **Piezoventil**
Piezo valve
Soupape piézo-électrique

(43) Veröffentlichungstag der Anmeldung: 17.08.2005
(73) Patentinhaber: FESTO AG & Co, 73734 Esslingen (DE)
(72) Erfinder: Frisch, Herbert, 73035 Göppingen-Bartenbach (DE)
(74) Vertreter: Abel, Martin

(56) Entgegenhaltungen:
- EP-A- 0 538 236
- EP-A- 1 207 329

## Beschreibung

Die Erfindung betrifft ein Piezoventil, mit einem in einem Ventilgehäuse angeordneten Biegewandler, der einenends einen gehäuseseitig gelagerten Lagerungsabschnitt aufweist und der einen frei endenden Arbeitsabschnitt besitzt, der sich in einer Ventilkammer über zwei steuerbare Ventilöffnungen in Gestalt einer Zuströmöffnung und einer Abströmöffnung hinweg erstreckt und durch entsprechende elektrische Ansteuerung in einer Auslenkebene quer zu seiner Längsrichtung auslenkbar ist, um jede der beiden steuerbaren Ventilöffnungen wahlweise zur Verbindung mit einer Arbeitsöffnung freizugeben oder durch Anlage an einem zugeordneten Ventilsitz zu verschließen.

Bei einem aus der EP 0538236 B1 bekannten, als 3/2-Wegeventil ausgebildeten Piezoventil dieser Art ragt der Biegewandler mit seinem auslenkbaren Arbeitsabschnitt zwischen zwei steuerbare Ventilöffnungen, bei denen es sich um eine Zuströmöffnung und eine Abströmöffnung handelt. Im elektrisch spannungslosen Zustand liegt der Arbeitsabschnitt unter Einnahme einer Sperrstellung an dem die Zuströmöffnung umschließenden Ventilsitz an, sodass die Zuströmöffnung verschlossen ist. Durch Anlegen einer Spannung an den Biegewandler erfährt der Arbeitsabschnitt aufgrund des piezoelektrischen Effekts eine Auslenkkraft, sodass er verschwenkt wird, wobei er die Zuströmöffnung freigibt und stattdessen letztlich die Abströmöffnung verschließt.

Die EP 1207329 B1 beschreibt ein Piezoventil, dessen Aufbauprinzip neben einer 3/2-Funktionalität auch beispielsweise eine 3/3-Funktionalität ermöglicht. Dieses Piezoventil ist mit zwei nebeneinander angeordneten Biegewandlern versehen, die an einem rückseitigen Lagerungsabschnitt zu einer Biegewandlereinheit zusammengefasst sind. Jeder Biegewandler ragt über eine steuerbare Ventilöffnung hinweg. Durch entsprechend aufeinander abgestimmte Ansteuerung der beiden Biegewandler können die steuerbaren Ventilöffnungen abwechselnd oder auch gleichzeitig freigegeben und abgesperrt werden. Allerdings ist die Herstellung der Biegewandlereinheit relativ kostenintensiv. Zudem ergibt sich eine nicht unbeträchtliche Beanspruchung im Lagerungsbereich aufgrund der dort auftretenden Verwindungskräfte. Und nicht zuletzt ist ein relativ großer elektrischer Kontaktierungsaufwand vonnöten, um die elektrische Ansteuerung der beiden Biegewandler zu ermöglichen.

In der EP 0993567 B1 werden unterschiedliche Arten von piezoelektrischen Biegewandlern beschrieben. Neben solchen, die ausgehend vom Lagerungsabschnitt frei endend auskragen, werden auch Bauformen vorgestellt, die beidenends fixiert sind, sodass sie beim Aktivieren nicht verschwenken, sondern lediglich ausbauchen.

Es ist die Aufgabe der vorliegenden Erfindung, ein Piezoventil zu schaffen, das auf verhältnismäßig einfache und kostengünstige Weise und bei geringer Relaxationsproblematik die Realisierung einer Dreiwegefunktionalität ermöglicht.

Zur Lösung dieser Aufgabe ist vorgesehen, dass die beiden steuerbaren Ventilöffnungen auf der gleichen Längsseite des Arbeitsabschnittes, in dessen Längsrichtung beabstandet zueinander, angeordnet sind, wobei der Arbeitsabschnitt zwei entsprechend beabstandete, den beiden steuerbaren Ventilöffnungen zugeordnete zuströmseitige bzw. abströmseitige Steuerabschnitte aufweist, und dass an dem Arbeitsabschnitt im Bereich des zuströmseitigen Steuerabschnittes zusätzlich zum Biegewandler vorgesehene Beaufschlagungsmittel angreifen, durch die der zuströmseitige Steuerabschnitt ständig in Richtung zu seiner Schließstellung beaufschlagt ist, wobei die Beaufschlagungskraft hoch genug ist, um den zuströmseitigen Steuerabschnitt bei in der Freigabestellung befindlichem abströmseitigen Steuerabschnitt in der Schließstellung zu halten.

Auf diese Weise kann mit relativ einfachen Mitteln ein wenig relaxationsanfälliges Dreiwege-Piezoventil realisiert werden. Die an dem Arbeitsabschnitt angreifenden Beaufschlagungsmittel, beispielsweise Federmittel oder Dauermagnetmittel, gewährleisten ein zuverlässiges Verschließen der Zuströmöffnung gegen den anstehenden Fluiddruck, ohne den Biegewandler einer Relaxationsgefahr auszusetzen. Durch die der Beaufschlagungskraft überlagerte, durch die elektrische Ansteuerung des Biegewandlers erzeugbare Auslenkkraft lässt sich erreichen, dass entweder der zuströmseitige oder der abströmseitige Steuerabschnitt die ihm jeweils zugeordnete steuerbare Ventilöffnung verschließt, während gleichzeitig die jeweils andere steuerbare Ventilöffnung freigegeben ist, sodass das zu steuernde Fluid zwischen ihr und einer mit einem Verbraucher verbindbaren Arbeitsöffnung überströmen kann. Neben einer 3/2-Ventilfunktionalität lässt sich auf der Basis des erfindungsgemäßen. Prinzips relativ problemlos auch eine 3/3-Ventilfunktionalität erzielen, ohne auf eine Mehrfachanordnung von Biegewandlern zurückgreifen zu müssen. Da folglich auf der Basis des Grundprinzips eine große Variantenvielfalt realisierbar ist, kann durch umfangreichen Einsatz von Gleichteilen ein niedriges Fierstellkostenniveau eingehalten werden.

Vorteilhafte Weiterbildungen der Erfindung gehen aus den Unteransprüchen hervor.

Die steuerbaren Ventilöffnungen können je nach Bedarf in ihrer Reihenfolge unterschiedlich platziert werden, sodass entweder die Zuströmöffnung oder die Abströmöffnung näher beim Lagerungsabschnitt liegt. Dementsprechend ergibt sich auch eine unterschiedliche Platzierung des unter dem ständigen Einfluss der Beaufschlagungsmittel stehenden zuströmseitigen Steuerabschnittes.

Um ein 3/3-Wegeventil zu erhalten, ist der Biegewandler zweckmäßigerweise so ausgebildet und angeordnet, dass in seinem elektrisch spannungslosen Neutralzustand beide Steuerabschnitte in Bezug auf die ihnen jeweils zugeordnete steuerbare Ventilöffnung die Schließstellung einnehmen. In Verbindung mit einer Ausgestaltung des Biegewandlers, die bei entsprechender elektrischer Ansteuerung ausgehend von der Neutralstellung die Erzeugung einer Auslenkkraft in wahlweise der einen oder anderen Richtung ermöglicht, lässt sich ausgehend vom Neutralzustand wahlweise eine Speisestellung oder eine Entlüftungsstellung realisieren, wobei entweder die Zuströmöffnung oder die Abströmöffnung mit der Arbeitsöffnung verbunden und gleichzeitig die jeweils andere steuerbare Ventilöffnung verschlossen ist. Der Neutralzustand entspricht hierbei einer Sperrstellung, in der beide steuerbaren ventilöffnungen durch den Biegewandler dicht verschlossen sind.

Um eine 3/2-Ventilfunktionalität zu realisieren, ist der Biegewandler zweckmäßigerweise so ausgebildet und angeordnet, dass im elektrisch spannungslosen Neutralzustand der eine Steuerabschnitt die Schließstellung.und der andere Abschnitt die Freigabestellung bezüglich der jeweils zugeordneten steuerbaren Ventilöffnung einnimmt. Dies lässt sich insbesondere dadurch erreichen, dass man einen Biegewandler einsetzt, der im Neutralzustand eine zumindest im Wesentlichen lineare Erstreckung aufweist und der so platziert ist, dass seine Längsachse bezüglich einer die Ventilsitze der beiden steuerbaren Ventilöffnungen enthaltenden Ventilsitzebene im Neutralzustand einen geneigten Verlauf hat. Wird der Biegewandler dann ausgehend vom Neutralzustand elektrisch erregt, gelangt zunächst auch der zweite Steuerabschnitt in die Schließstellung, wobei die damit zusammenhängende Abstützwirkung im weiteren Verlauf des Schaltvorganges zur Folge hat, dass der zunächst noch die Schließstellung einnehmende Steuerabschnitt vom zugeordneten Ventilsitz abhebt und in die Freigabestellung ausgelenkt wird.

Entsprechend der im Neutralzustand gewählten Neigung können 3/2-Piezoventile in wahlweise einer Ausführung "Normalerweise Geschlossen" oder "Normalerweise Offen" verwirklicht werden.

Ist die Lagerstelle für den Lagerungsabschnitt des Biegewandlers in der Auslenkebene quer zur Längsrichtung des Biegewandlers justierbar, kann der im Neutralzustand vorliegende Neigungswinkel des Biegewandlers einfach variiert werden, um den gewünschten Ventiltyp zu erhalten. Zudem erlaubt die Justierbarkeit des Lagerungsabschnittes in Verbindung mit einem 3/3-Wegeventil eine exakte Ausrichtung des Biegewandlers derart, dass er im Neutralzustand eine gleichzeitig beide steuerbaren Ventilöffnungen verschließende Sperrstellung einnimmt .

Die in Bezug auf die steuerbaren Ventilöffnungen wahlweise verbindbare oder absperrbare Arbeitsöffnung mündet zweckmäßigerweise auf der gleichen Längsseite wie die steuerbaren Ventilöffnungen in die den Arbeitsabschnitt des Biegewandlers aufnehmende Ventilkammer ein. Zweckmäßigerweise liegt die Arbeitsöffnung in Längsrichtung des Biegelementes zwischen den beiden steuerbaren Ventilöffnungen.

Prinzipiell wäre es möglich, den Biegewandler an seinem Lagerungsabschnitt unbeweglich bezüglich des Ventilgehäuses zu fixieren, beispielsweise durch eine feste Einspannung. Es ist allerdings dem gewünschten Bewegungsverhalten des Biegeelementes förderlich, wenn der Biegewandler an der entsprechenden Lagerstelle insgesamt bezüglich des Ventilgehäuses verschwenkbar gelagert ist. Er kann sich dadurch ohne feste Zwänge in die optimale Lage begeben.

Zur Realisierung der Schwenklagerung wäre es durchaus möglich, ortsfeste Lagerachsmittel vorzusehen, die eine Drehachse für den Biegewandler definieren. Hierzu könnten an den beiden längsseitigen Rändern des Biegewandlers vorstehende Achszapfen am Ventilgehäuse gelagert sein.

Vor allem wenn das Piezoventil über nur geringe Abmessungen verfügt, kann die Lagerung auch dadurch realisiert werden, dass der Lagerungsabschnitt durch sich am Ventilgehäuse abstützende Federmittel, in der Auslenkebene nachgiebig, gegen ein ventilgehäusefestes Widerlager gedrückt wird.

Greift man auf ein Widerlager zurück, das einen am Lagerungsabschnitt linienförmig anliegenden Widerlagerabschnitt definiert, erhält man eine zuverlässige Abstützung des Biegeelements, sodass einem Verwinden des Biegewandlers entgegengewirkt ist und eine sichere, zuverlässig dichte Anlage der Steuerabschnitte an den Ventilsitzen der steuerbaren Ventilöffnungen garantiert ist.

Ein vergleichbarer Effekt lässt sich jedoch auch bei einem nur punktförmig am Biegewandler angreifenden Widerlager erzielen, wenn die zum Zusammenwirken mit dem Arbeitsabschnitt vorgesehenen Ventilsitze über entsprechende Querausdehnungen verfügen. In diesem Zusammenhang ist es dann beispielsweise möglich, eine oder beide steuerbaren Ventilöffnungen mit einem Öffnungsquerschnitt zu versehen, der rechtwinkelig zur Auslenkebene eine längliche Gestalt hat. Alternativ könnte die betreffende steuerbare Ventilöffnung nicht nur als eine einzige Öffnung, sondern in Gestalt mehrerer Einzelöffnungen realisiert werden, die quer zur Auslenkebene nebeneinander angeordnet sind und denen jeweils ein eigener Ventilsitz zugeordnet ist, an dem sich der Arbeitsabschnitt abstützen kann. In allen Fällen kann auf diese Weise eine zuverlässige Mehrfachabstützung des Biegewandlers in seiner Längs- und Querrichtung erzielt werden, die in jeder Schaltstellung einem Verkippen um die Längsachse entgegenwirkt.

Nachfolgend wird die Erfindung anhand der beiliegenden Zeichnung näher erläutert. In dieser zeigen:
- Fig. 1 bis 3: eine erste Bauform des erfindungsgemäßen Piezoventils in einer Ausgestaltung als 3/3-Wegeventil in schematischer Längsschnittdarstellung, wobei die Fig. 1 eine Sperrstellung, die Fig. 2 eine Speisestellung und die Fig. 3 eine Entlüftungsstellung wiedergibt,
- Fig. 4 bis 6: wiederum ein 3/3-Wege-Piezoventil in einer Längsschnittdarstellung mit im Vergleich zu Fig. 1 bis 3 vertauschten Zuström- und Abströmöffnungen, wobei die Fig. 4 eine Sperrstellung, die Fig. 5 eine Speisestellung und die Fig. 6 eine Entlüftungsstellung wiedergibt,
- Fig. 7 und 8: das Piezoventil in einer 3/2-Wege-Ausführung und vom Typ "Normalerweise Geschlossen", wobei die Fig. 7 eine Entlüftungsstellung und die Fig. 8 eine Speisestellung wiedergibt,
- Fig. 9 und 10: wiederum ein 3/2-Wege-Piezoventil im Längsschnitt, allerdings vom Typ "Normalerweise Offen", wobei die Fig. 9 eine Speisestellung und die Fig. 10 eine Entlüftungsstellung wiedergibt,
- Fig. 11: eine im Vergleich zur Bauform der Fig. 4 bis 6 hinsichtlich der gehäuseseitigen Lagerung des Biegewandlers modifizierte Bauform eines 3/3-Piezoventils im Längsschnitt in Entlüftungsstellung, wobei überdies die Zuströmöffnung und die Abströmöffnung jeweils in Gestalt zweier Einzelöffnungen ausgeführt sind,
- Fig. 12: einen Schnitt durch das Piezoventil aus Fig. 11 gemäß Schnittlinie XII-XII, wobei durch ein eingezeichnetes Dreieck die Auflagepunkte für den Biegewandler markiert sind,
- Fig. 13: eine hinsichtlich der Gestaltung der Zuström- und Abströmöffnungen modifizierte Bauform des Piezoventils aus Fig. 11 in einer der Fig. 12 entsprechenden Schnittdarstellung,
- Fig. 14: das in Fig. 11 in einer Entlüftungsstellung gezeigte Piezoventil, nunmehr unter Einnahme einer Speisestellung,
- Fig. 15: das Piezoventil aus Fig. 14 im Schnitt gemäß Schnittlinie XV-XV,
- Fig. 16: eine im Sinne der Fig. 13 modifizierte Bauform des Piezoventils in einer vergleichbaren Schnittdarstellung, wobei die in einer Speisestellung erfolgende Abstützung des Biegewandlers ersichtlich ist,
- Fig. 17: ein im Vergleich zu Fig. 11 bis 16 hinsichtlich der Lagerung modifiziertes 3/3-Piezoventil, wobei anstelle einer Punktlagerung eine Linienlagerung vorgesehen ist, bei Einnahme einer Entlüftungsstellung,
- Fig. 18: das Piezoventil aus Fig. 17 im Schnitt gemäß Schnittlinie XVIII-XVIII, wobei durch ein Dreieck die sich ergebende Abstützung für den Biegewandler illustriert ist,
- Fig. 19: das Piezoventil der Fig. 17 in einer Speisestellung und
- Fig. 20: das Piezoventil aus Fig. 19 im Schnitt gemäß Schnittlinie XX-XX, wobei wiederum die Abstützung des Biegewandlers durch eine Dreieckslinie verdeutlicht ist.

Die aus der Zeichnung ersichtlichen Piezoventile verfügen jeweils über ein in der Regel zweiteiliges Ventilgehäuse 1, das im Innern eine längliche Ventilkammer 2 begrenzt. In dieser Ventilkammer 2 befindet sich ein Längsgestalt aufweisender, streifenförmiger Biegewandler 3, dessen rückwärtiger Endabschnitt einen Lagerungsabschnitt 4 bildet, mit dem er direkt oder über zwischengeschaltete Lagermittel am Ventilgehäuse 1 gelagert ist. Die Lagerstelle ist mit Bezugsziffer 5 bezeichnet.

Ausgehend von der Lagerstelle 5 kragt der Biegewandler 3 zum entgegengesetzten Ende hin aus. An den Lagerungsabschnitt 4 schließt sich ein frei endender Arbeitsabschnitt 6 an, der sich über zwei durch ihn steuerbare Ventilöffnungen in Gestalt einer Zuströmöffnung 7 und einer Abströmöffnung 8 hinweg erstreckt.

Die vorgenannten steuerbaren Ventilöffnungen sind die zur Ventilkammer 2 hin offenen Mündungen zweier Ventilkanäle in Gestalt eines Zuströmkanals 12 und eines Abströmkanals 13. Der Zuströmkanal 12 ist im Betrieb des Piezoventils mit einer das zu steuernde Fluid liefernden Druckquelle P verbunden. Der Abströmkanal 13 führt, je nachdem, ob das Piezoventil mit einem hydraulischen Medium oder mit Druckluft betrieben wird, zu einem Tank oder zur Atmosphäre R.
Zusätzlich mündet noch ein als Arbeitskanal 14 fungierender weiterer Ventilkanal mit einer Arbeitsöffnung 9 ebenfalls in die Ventilkammer 2 ein. Er wird normalerweise mit einem anzusteuernden Verbraucher verbunden, beispielsweise einem durch Fluidkraft betätigbaren Antrieb.

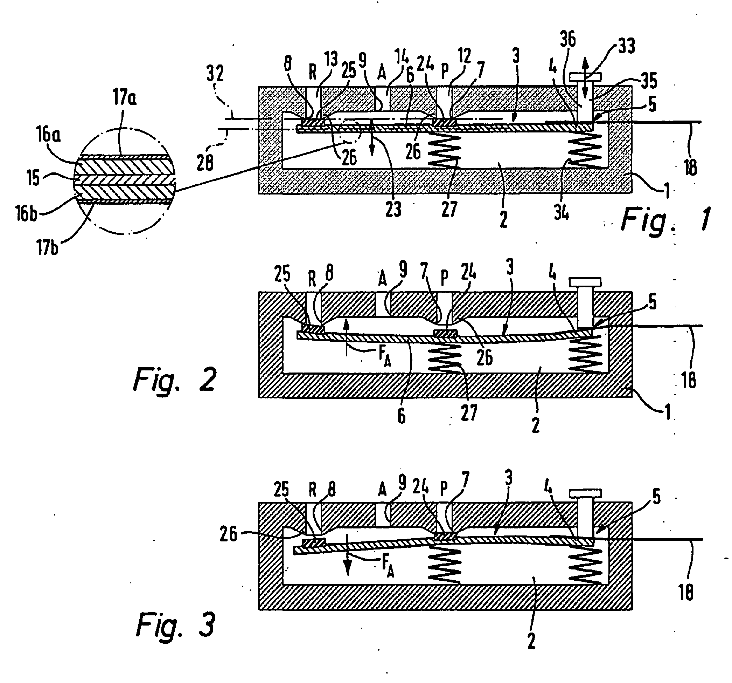

Die Biegewandler 3 haben vorzugsweise (vgl. vergrößerter Ausschnitt in Fig. 1) einen trimorphen Aufbau mit zwei unter Zwischenschaltung einer Innenelektrode 15 längsseits aneinander befestigten länglichen Piezokörpern 16a, 16b. Jeder Piezokörper 16a, 16b ist an der der Innenelektrode 15 entgegengesetzten Außenseite mit einer Außenelektrode 17a, 17b versehen. Über aus dem Ventilgehäuse 1 herausgeführte, nur schematisch angedeutete elektrische Kontaktmittel 18 kann an die Elektroden 15, 17a, 17b in ausgewählter Weise eine Ansteuerspannung angelegt werden, die aufgrund des umgekehrten piezoelektrischen Effektes in dem Arbeitsabschnitt 6 eine Auslenkkraft F_{A} hervorruft, die danach strebt, den Arbeitsabschnitt 6 in einer Auslenkebene 22 relativ zu dem sich am Ventilgehäuse 1 abstützenden Lagerungsabschnitt 4 auszulenken. Wenigstens bei den 3/3-Wege-Piezoventilen kann die Ansteuerspannung wahlweise so angelegt werden, dass die Auslenkkraft F_{A} in wahlweise einer von zwei einander entgegengesetzten Richtungen orientiert ist. Hierzu wird beispielsweise entweder zwischen die Innenelektrode 15 und die eine Außenelektrode 17a oder zwischen die Innenelektrode 15 und die andere Außenelektrode 17b eine Ansteuerspannung angelegt. Die Auslenkebene 22 verläuft in Fig. 1 bis 11 sowie 14, 17 und 19 parallel zur Zeichenebene und steht rechtwinkelig auf der Ausdehnungsebene des wie erwähnt streifenförmig ausgebildeten Biegewandlers 3.

Prinzipiell könnte der Biegewandler 3 auch über einen anderen strukturellen Aufbau verfügen und beispielsweise als bimorpher Piezobieger konzipiert sein. Möglich ist ferner eine mehrschichtige Ausführung der Piezokörper 16a, 16b, um einen Multilayer-Biegewandler zu erhalten.

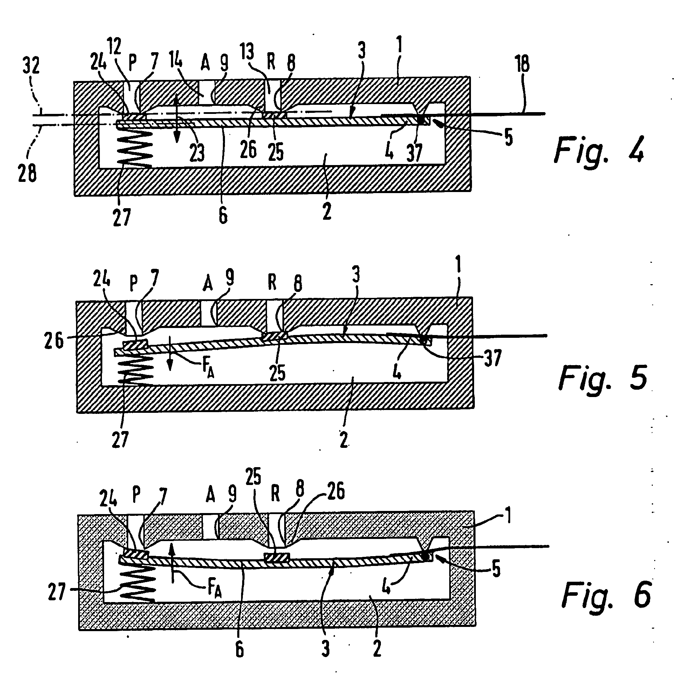

Bei allen Ausführungsbeispielen erstreckt sich der Biegewandler 3 über sowohl die Zuströmöffnung 7 als auch die Abströmöffnung 8 hinweg, wobei diese beiden Ventilöffnungen auf ein und derselben Längsseite des Arbeitsabschnittes 6 angeordnet sind, bezüglich der sich der Arbeitsabschnitt 6 bei der Auslenkbewegung annähern oder entfernen kann. Mit anderen Worten handelt es sich um eine solche Längsseite des Biegewandlers 3, die einer der beiden großflächigen Biegewandler-Außenflächen zugeordnet ist. Dabei sind die beiden steuerbaren Ventilöffnungen 7, 8 in der Längsrichtung des Arbeitsabschnittes 6 mit Abstand zueinander angeordnet, sodass entweder - wie im Falle der Bauformen gemäß Fig. 1 bis 3 und 7 bis 10 - die Zuströmöffnung 7 zwischen dem Lagerungsabschnitt 4 und der Abströmöffnung 8 liegt, oder - wie bei den Bauformen der Fig. 4 bis 6 und 11 bis 20 - die Abströmöffnung 8 zwischen dem Lagerungsabschnitt 4 und der Zuströmöffnung 7 platziert ist. Die mögliche Auslenkbewegung des Arbeitsabschnittes 6 ist in der Zeichnung allgemein durch den Doppelpfeil 23 angedeutet. In Richtung dieser Auslenkbewegung 23 gegenüberliegend einer jeweiligen steuerbaren Ventilöffnungen 7, 8, verfügt der Arbeitsabschnitt 6 des Biegewandlers 3 über jeweils einen Steuerabschnitt, der - entsprechend der Zuordnung zur entsprechenden Ventilöffnung 7, 8 - als zuströmseitiger Steuerabschnitt 24 bzw. als abströmseitiger Steuerabschnitt 25 bezeichnet sei. Diese Steuerabschnitte 24, 25 können unmittelbar von einer der Biegewandlerschichten gebildet sein oder aber - wie dies bei den Ausführungsbeispielen der Fall ist - von jeweils einem aus geeignetem Dichtmaterial bestehenden, am Biegewandler 3 fixierten Pad. Beispielsweise handelt es sich bei den Pads um Gummi-Pads.

Die beiden steuerbaren Ventilöffnungen 7, 8 sind jeweils von einem bezüglich benachbarter Ventilgehäuseflächen erhabenen ventilsitz 26 umrahmt. Allerdings ist die erhabene Ventilsitzgestaltung nicht zwingend.

Jeder Steuerabschnitt 24, 25 ist in der Lage, den ihm gegenüberliegenden Ventilkanal 12, 13 fluiddicht abzusperren, wenn er mit einer gewissen Anpresskraft an den zugeordneten Ventilsitz 26 angedrückt wird.

Mithin ist es möglich, die Fluidströmung durch den Zuströmkanal 12 und den Abströmkanal 13 zu steuern, indem der zugeordnete Steuerabschnitt 24, 25 entweder am betreffenden Ventilsitz 26 anliegt oder von diesem abgehoben wird, sodass die betroffene Zuströmöffnung 7 oder Abströmöffnung 8 entweder freigegeben oder verschlossen ist. Die entsprechende Position der Steuerabschnitte 24, 25 wird durch die Aktivierung und Nichtaktivierung und die daraus resultierende Auslenkung und Nichtauslenkung des Biegewandlers 3 hervorgerufen.

Die Arbeitsöffnung 9 ist unabhängig von der momentanen Stellung des Arbeitsabschnittes 6 offen, sodass eine ständige Verbindung zwischen dem Arbeitskanal 14 und der Ventilkammer 2 vorliegt. Zweckmäßigerweise befindet sich die Arbeitsöffnung 9 auf der gleichen Längsseite des Biegewandlers 3 wie die beiden steuerbaren Ventilöffnungen 7, 8. Zu Gunsten kurzer Strömungswege ist sie dabei zweckmäßigerweise zwischen den beiden steuerbaren Ventilöffnungen 7, 8 platziert.

Jedes Piezoventil verfügt über zusätzlich zum Biegewandler 3 vorgesehene Beaufschlagungsmittel 27, die im Bereich des zuströmseitigen Steuerabschnittes 24 an dem Arbeitsabschnitt 6 angreifen, und durch die der zuströmseitige Steuerabschnitt 24 ständig in Richtung seiner Schließstellung beaufschlagt ist. Bevorzugt handelt es sich bei den Beaufschlagungsmitteln um eine zwischen dem Arbeitsabschnitt 6 und dem Ventilgehäuse 1 wirksame Federeinrichtung und dabei insbesondere um mindestens eine sich einenends an der Innenfläche der Ventilkammer 2 und andernends rückseitig am Arbeitsabschnitt 6 abstützende mechanische Druckfeder.

Alternativ könnten auch andere Beaufschlagungsmittel vorgesehen sein, beispielsweise solche auf fluidischem oder magnetischem Wirkprinzip. Jedenfalls sollte die Beaufschlagungskraft so groß sein, dass der im Zuströmkanal anstehende Fluiddruck nicht in der Lage ist, den in der Schließstellung befindlichen zuströmseitigen Steuerabschnitt 24 abzuheben. Insbesondere sollte die Beaufschlagungskraft mindestens so hoch sein, dass der zuströmseitige Steuerabschnitt 24 in der Schließstellung gehalten werden kann, wenn sich der abströmseitige Steuerabschnitt in der vom zugeordneten Ventilsitz abgehobenen Freigabestellung befindet.

Das in Fig. 1 bis 3 gezeigte Piezoventil ist als 3/3-Wegeventil konzipiert, verfügt also über drei Schaltstellungen zur Verknüpfung der drei Ventilöffnungen 7, 8, 9. Sein Biegewandler 3 weist im elektrisch spannungslosen Neutralzustand eine zumindest im Wesentlichen lineare Erstreckung auf und ist in der Ventilkammer 2 so angeordnet, dass beide Steuerabschnitte 24, 25 am gegenüberliegenden Ventilsitz 26 anliegen und die Schließstellung einnehmen. Die Längsachse 28 des Biegewandlers 3 verläuft dabei mit Abstand etwa parallel zu einer die beiden Ventilsitze 26 enthaltenden Ventilsitzebene 32. In dieser Ventilsitzebene 32 liegt auch die Lagerstelle 5, sodass der Biegewandler 3 in seiner Längsrichtung an drei Stellen gehäusefest abgestützt ist. Aufgrund der Beaufschlagungsmittel 27, die in der Längsrichtung des Biegewandlers 3 auf gleicher Höhe mit der Zuströmöffnung 7 auf den Biegewandler 3 einwirken, wird die Zuströmöffnung 7 durch den zuströmseitigen Steuerabschnitt 24 mit einer ausreichend hohen Anpresskraft verschlossen, um ein Abheben durch den anstehenden Fluiddruck zu verhindern.

Somit liegt eine Sperrstellung vor, in der der Biegewandler 3 beide steuerbaren Ventilöffnungen 7, 8 dicht verschließt. Um zum Erhalt dieser Sperrstellung die beiden Steuerabschnitte 24, 25 exakt ausrichten zu können, ist beim Ausführungsbeispiel die Lagerstelle 5 in der Auslenkebene 22 gemäß Doppelpfeil 33 quer zur Längsrichtung des Biegewandlers 3 justierbar. Es lässt sich damit also die Ausrichtung des Biegewandlers 3 in Bezug auf die Ventilsitzebene 32 exakt einstellen, um in der Sperrstellung die Schließstellung der beiden Steuerabschnitte 24, 25 zu gewährleisten.

Um bei dem Piezoventil der Fig. 1 bis 3 die Speisestellung zu erhalten, in der die Zuströmöffnung 7 über die Ventilkammer 2 hinweg mit der Arbeitsöffnung 9 in Verbindung steht und gleichzeitig die Abströmöffnung 8 verschlossen bleibt, wird der Biegewandler 3 so angesteuert, dass sich eine Auslenkkraft F_{A} in Richtung der die Ventilsitze 26 aufweisenden Längsseite einstellt. Dies bewirkt ein Auslenken des Arbeitsabschnittes 6 im Sinne eines Ausbauchens im mittleren Bereich, wobei der zuströmseitige Steuerabschnitt 24 von der Zuströmöffnung 7 unter Überwindung der Anpresskraft der Beaufschlagungsmittel 27 abgehoben wird (Fig. 2).

Soll hingegen die Entlüftungsstellung eingestellt werden, in der die Abströmöffnung 8 über die Ventilkammer 2 mit der Arbeitsöffnung 9 verbunden und gleichzeitig die Zuströmöffnung 7 verschlossen ist, erfolgt eine Ansteuerung des Biegewandlers 3 in entgegengesetzter Richtung, sodass sich eine von der Seite der Ventilsitze 26 wegweisende Auslenkkraft F_{A} einstellt. Gemäß Fig. 3 führt dies dazu, dass der dem freien Ende des Arbeitsabschnittes 6 zugeordnete abströmseitige Steuerabschnitt 25 von der Abströmöffnung 8 wegschwenkt und abhebt, während der zuströmseitige Steuerabschnitt 24 durch die Beaufschlagungsmittel 27 gegen die Zuströmöffnung 7 gedrückt wird.

Abgesehen von der vertauschten Anordnung der beiden steuerbaren Ventilöffnungen 7, 8 und einer anderen Lagerungsart des Lagerungsabschnittes 4 stimmt der Aufbau des in Fig. 4 bis 6 gezeigten Piezoventils mit dem vorstehend beschriebenen überein. Zum Erhalt der Speisestellung wird hier im Arbeitsabschnitt 6 eine von der Seite der Ventilsitze 26 wegweisende Auslenkkraft F_{A} hervorgerufen, die dazu führt, dass der Arbeitsabschnitt 6 im Bereich des mit dem zuströmseitigen Steuerabschnitt 24 versehenen freien Endes unter Zurückdrängung der Beaufschlagungsmittel 27 von der Zuströmöffnung 7 weggeschwenkt wird, während gleichzeitig der abströmseitige Steuerabschnitt 25 aufgrund der Durchbiegung des Biegewandlers 3 am Ventilsitz 26 der Abströmöffnung 8 anliegen bleibt. Zum Erhalt der Entlüftungsstellung erfolgt eine umgekehrte Ansteuerung des Biegewandlers 3, wobei nun der zuströmseitige Steuerabschnitt 24 zusätzlich zu den Beaufschlagungsmitteln 27 auch noch mit der sich ergebenden Auslenkkraft F_{A} an die Zuströmöffnung 7 angedrückt wird, während sich der Arbeitsabschnitt 6 gleichzeitig so ausbaucht, dass der im mittleren Bereich liegende abströmseitige Steuerabschnitt 25 von der Abströmöffnung 8 abhebt.

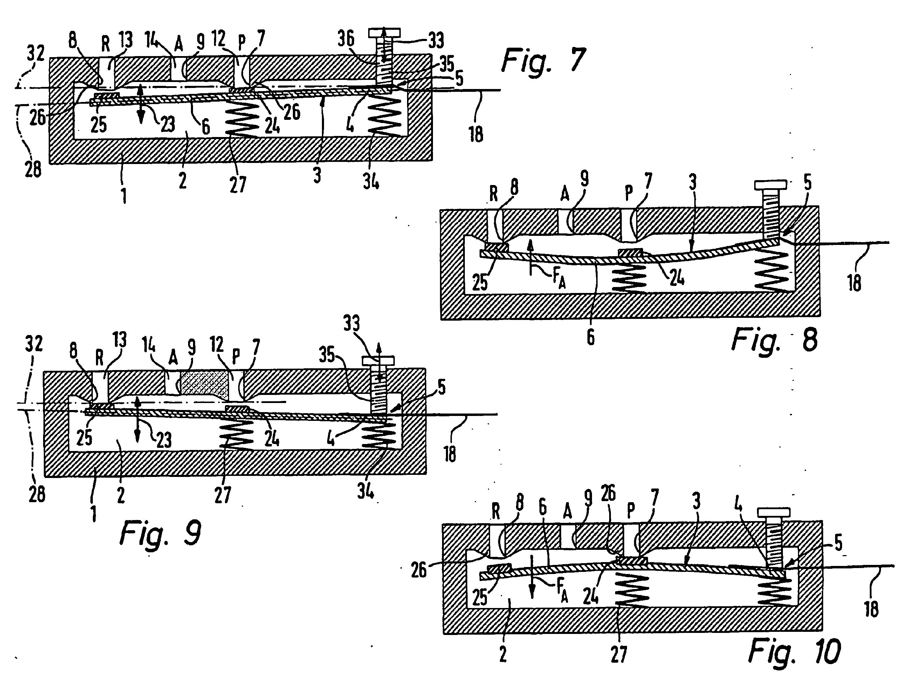

Die in Fig. 7 bis 10 gezeigten Piezoventile verfügen über eine 3/2-Funktionalität und können bei Bedarf mit einem Biegewandler betrieben werden, dessen Arbeitsabschnitt 6 in lediglich einer Richtung eine Auslenkkraft F_{A} ausüben kann. Im grundsätzlichen Aufbau unterscheiden sich die Piezoventile der Fig. 7 bis 10 von demjenigen der Fig. 1 bis 3 ansonsten nur dadurch, dass die Lagerstelle 5 in der Richtung der Auslenkbewegung 23 anders positioniert ist, sodass der Biegewandler 3 im elektrisch spannungslosen Neutralzustand gegenüber der Ventilsitzebene 32 schräg angestellt ist. Dadurch wird erreicht, dass in dem Neutralzustand der eine Steuerabschnitt die Schließstellung und der andere Steuerabschnitt die Freigabestellung einnimmt.

Bei der Anordnung gemäß Fig. 7 und 8 ist die Neigung des Biegewandlers 3 im Neutralzustand so gewählt, dass der zuströmseitige Steuerabschnitt die Zuströmöffnung 7 verschließt, während der abströmseitige Steuerabschnitt 25 von der Abströmöffnung 8 abgehoben ist und diese freigibt. Es handelt sich somit um ein Ventil des Typs "Normalerweise Geschlossen", wobei im elektrisch spannungslosen Neutralzustand die Entlüftungsstellung gegeben ist. Zum Umschalten in die Speisestellung wird der Biegewandler 3 so erregt, dass der Arbeitsabschnitt eine Auslenkkraft F_{A} in Richtung zu den Ventilsitzen 26 erfährt, sodass er sich im mittleren Bereich ausbaucht und letztlich der in Fig. 8 gezeigte Zustand erhalten wird, der mit dem anhand der Fig. 2 beschriebenen vergleichbar ist.

Das Piezoventil der Fig. 9 und 10 ist vom Typ "Normalerweise Offen", wobei im Neutralzustand die Speisestellung vorliegt. Die Neigung des Biegewandlers 3 gegenüber der Ventilsitzebene 32 ist hier verglichen mit dem Neutralzustand der Fig. 7 entgegengesetzt, sodass der abströmseitige Steuerabschnitt 25 an der Abströmöffnung 8 anliegt, während der zuströmseitige Steuerabschnitt 24 von der Zuströmöffnung 7 abgehoben ist.

Um hier die Entlüftungsstellung zu erreichen, wird der Biegewandler so angesteuert, dass der Arbeitsabschnitt eine von der Seite der Ventilsitze 26 wegweisende Auslenkkraft F_{A} erfährt, was zu dem in Fig. 10 gezeigten Zustand führt, der mit demjenigen der Fig. 3 vergleichbar ist.

Ist die Lagerstelle 5 in der Auslenkebene justierbar, wie dies bei den Piezoventilen der Fig. 1 bis 3 und 7 bis 10 der Fall ist (Justierbewegung 33), kann allein durch die höhenmäßige Justierung der Lagerstelle 5 die gewünschte Ventilfunktionalität bzw. der gewünschte Ventiltyp vorgegeben werden. Entsprechend der gewählten Einstellung ergibt sich im Neutralzustand des Biegewandlers 3 eine unterschiedliche Relativlage zur Ventilsitzebene 32 - entweder im Wesentlichen parallel oder in die eine oder andere Richtung geneigt -, sodass auf der Grundlage eines Basisventils eine äußerst flexible Ventilherstellung unter Verwendung gleicher Komponenten möglich ist.

Es wäre prinzipiell möglich, den Biegewandler 3 an seinem Lagerungsabschnitt 4 mit Bezug zum Ventilgehäuse 1 unbeweglich zu fixieren, beispielsweise durch eine feste Einspannung oder durch eine Einbettung in einer nicht verformbaren Vergussmasse. Allerdings werden die gewünschten Verformungen des Biegewandlers 3 bei den Schaltvorgängen begünstigt, wenn der Biegewandler 3 an der Lagerstelle 5 insgesamt bezüglich des Ventilgehäuses 1 verschwenkbar gelagert ist, also einschließlich des Lagerungsabschnittes 4. Dies trifft auf alle Ausführungsbeispiele zu.

Als besonders vorteilhaft hat sich hierbei die bei den Ausführungsbeispielen der Fig. 1 bis 3 und 7 bis 20 gezeigte Art der Schwenklagerung erwiesen. Hier ist der Lagerungsabschnitt 4 zwischen sich am Ventilgehäuse 1 abstützenden Federmitteln 34 und einem ventilgehäusefesten Widerlager in einer in gewissem Rahmen nachgiebigen Weise eingespannt. Die federelastische Vorspannung bewirkt, dass der Lagerungsabschnitt 4 relativ zu dem ortsfesten Widerlager 35 verschwenken kann, wobei entsprechend der momentanen Auslenkung eine mehr oder weniger starke Kompression der Federmittel 34 stattfindet, die den Schwenkwinkel kompensiert.

Bei den Ausführungsbeispielen der Fig. 1 bis 3 und 7 bis 10 ist diese Art der Lagerung in vorteilhafter Weise mit der schon angesprochenen höhenmäßigen Justiermöglichkeit für die Lagerstelle 5 verknüpft. Dies geschieht dadurch, dass das Widerlager 35 an einem relativ zum Ventilgehäuse 1 in Richtung der gewünschten Justierbewegung 33 variabel positionierbaren Stellglied 36 angeordnet ist, beispielsweise eine Schraube. Durch Verstellen des Stellgliedes 36 ändert sich die Position des Widerlagers 35 in der Richtung der Auslenkbewegung 23, wobei der Lagerungsabschnitt 4 mitgenommen wird und in jeder eingestellten Position durch die ihn beaufschlagenden Federmittel 34 trotzdem sicher fixiert bleibt. In Abhängigkeit von der Positionierung des Stellgliedes 36 verändert sich lediglich der Kompressionsgrad der Federmittel 34, was sich jedoch auf die Qualität der Schwenklagerung nicht auswirkt.

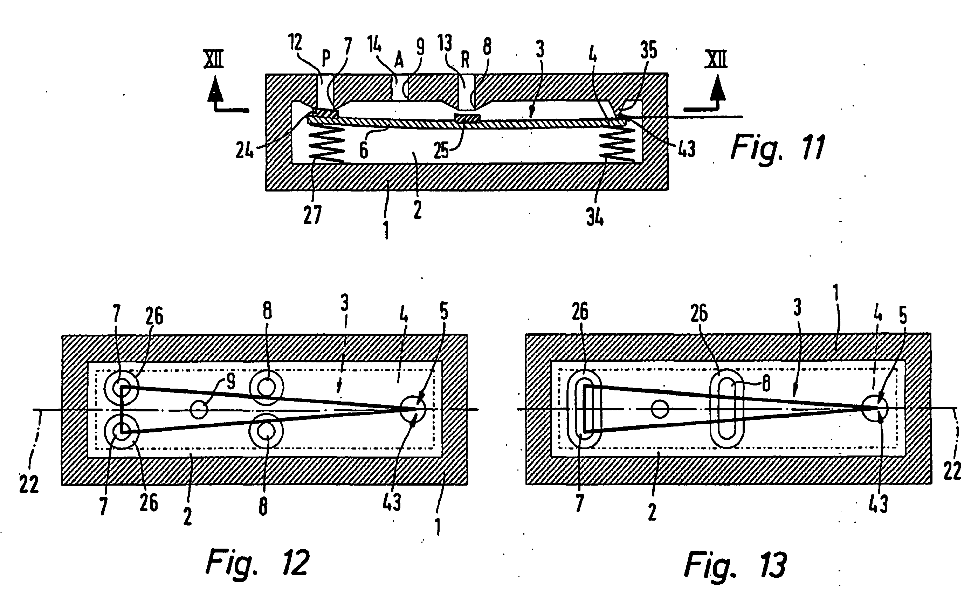

Im Gegensatz dazu ist bei den Ausführungsbeispielen der Fig. 11 bis 20 das Widerlager 35 ortsfest am Ventilgehäuse 1 angeordnet. Damit verbunden ist eine einfachere und kostengünstigere Herstellung.

Bei dem Ausführungsbeispiel der Fig. 4 bis 6 ist der Biegewandler 3 an der Lagerstelle 5 über zur Auslenkebene 22 rechtwinkelige, ortsfeste Drehachsmittel 37 verschwenkbar gelagert. Diese Drehachsmittel 37 sind unmittelbar als materielle Drehachse realisiert, beispielsweise durch an den beiden längsseitigen Rändern des Biegewandlers 3 vorstehende Achszapfen oder eine den Biegewandler 3 durchsetzende, beidseits vorstehende Welle, wobei die vorstehenden Abschnitte jeweils am Ventilgehäuse unter Gewährleistung des gewünschten Drehfreiheitsgrades gelagert sind.

Es ist unter allen Umständen zweckmäßig, den Biegewandler 3 innerhalb des Ventilgehäuses 1 in den möglichen Schaltstellungen so gegenüber dem Ventilgehäuse 1 abzustützen, dass er bezüglich seiner Längsachse 38 über eine statisch definierte Mehrpunktauflage, insbesondere eine Dreipunktauflage, verfügt. Dies gewährleistet eine sichere, vollumfängliche Anlage der Steuerabschnitte 24, 25 am zugeordneten Ventilsitz 26 bei Einnahme der jeweiligen Schließstellung.

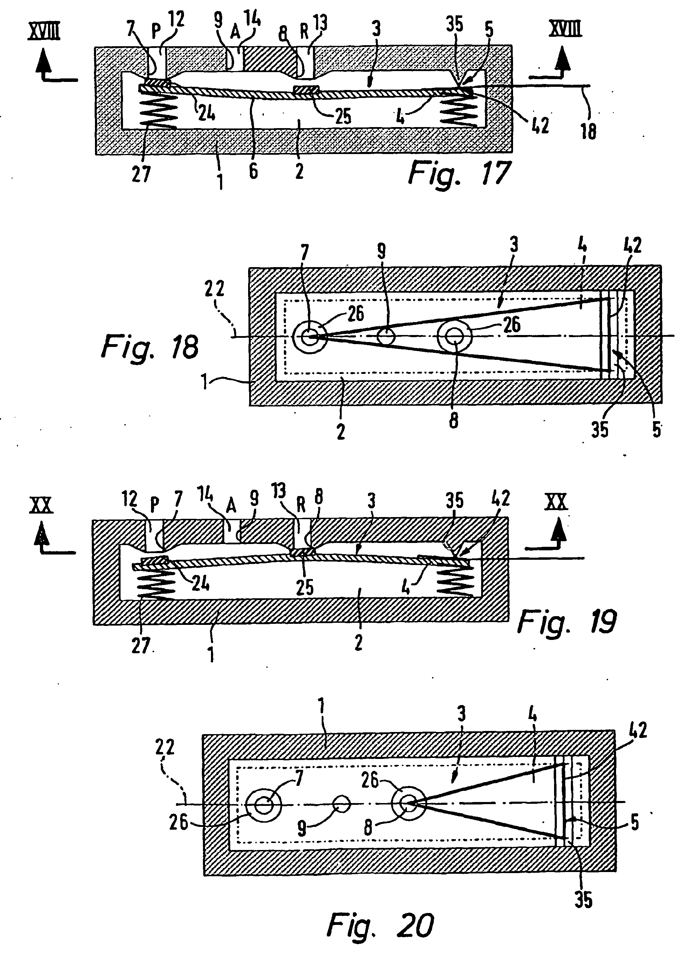

Beim Ausführungsbeispiel der Fig. 17 bis 20 wird dies in Verbindung mit steuerbaren Ventilöffnungen 7, 8, die jeweils aus einer einzigen Öffnung bestehen, durch ein Widerlager 35 erreicht, das einen zur Auslenkebene 22 rechtwinkeligen, linienförmigen Widerlagerabschnitt 42 definiert. Um einen solchen linienförmigen Widerlagerabschnitt 42 zu erhalten, kann das Widerlager 35 höckerähnlich mit scharfer Kante ausgebildet sein.

In sowohl der Speisestellung gemäß Fig. 19 und 20 als auch der Entlüftungsstellung gemäß Fig. 17 und 18 liegt der Biegewandler 3 zum einen mit einem seiner Steuerabschnitte punktuell auf einem der Ventilsitze 26 auf, während er zum anderen an dem Widerlager 35 linienförmig abgestützt ist. Daraus resultiert die in Fig. 18 und 20 durch ein Dreieck verdeutlichte Abstützkonfiguration, wobei die Spitze des Dreieckes jeweils im Bereich desjenigen Steuerabschnittes liegt, der sich an einem Ventilsitz 26 abstützt.

Eine vergleichbar statisch definierte Dreipunktauflage für den Biegewandler 3 kann allerdings auch in Verbindung mit einem Widerlager 35 erzielt werden, das gemäß Fig. 11 bis 16 einen punktuellen Widerlagerabschnitt 43 definiert, an dem sich der Lagerungsabschnitt 4 des Biegewandlers 3 abstützt. In diesem Falle wird zum Erhalt der dreieckförmigen Abstützkonfiguration dafür gesorgt, dass die beiden Steuerabschnitte 24, 25 in der Schließstellung rechtwinkelig zur Auslenkebene 22 über eine größere Länge oder an mehreren beabstandeten Punkten gegenüber dem Ventilgehäuse 1 abgestützt werden.

Dies ist beispielsweise gemäß der Bauform der Fig. 13 und 16 dadurch realisierbar, dass die jeweils zu steuernde Ventilöffnung 7, 8 einen Öffnungsquerschnitt besitzt, der in bezüglich der Auslenkebene 22 rechtwinkeliger Richtung eine längliche Gestalt aufweist, sodass auch der die betreffende Ventilöffnung 7, 8 umrahmende Ventilsitz 26 eine entsprechende Längsgestalt hat.

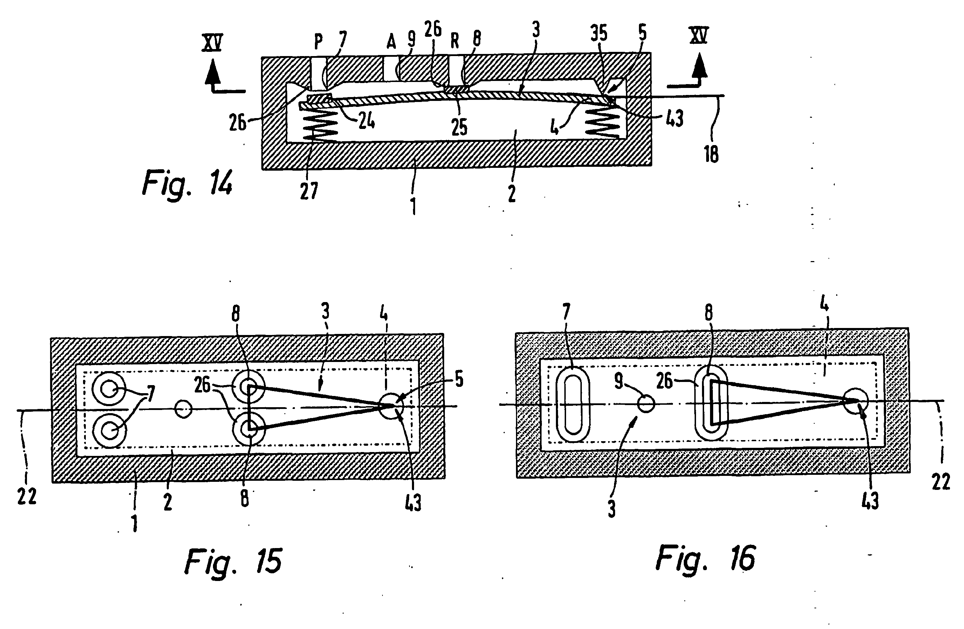

Alternativ könnte auch gemäß den Bauformen der Fig. 12 und 15 die jeweilige steuerbare Ventilöffnung 7, 8 nicht nur aus einer einzigen Öffnung, sondern aus mehreren und insbesondere aus zwei rechtwinkelig zu der Auslenkebene 22 nebeneinander angeordneten Einzelöffnungen bestehen. In diesem Fall besitzt jede Einzelöffnung ihren eigenen Ventilsitz 26, wobei durch die quer zur Auslenkebene 22 beabstandete Anordnung der Ventilsitze 26 wiederum eine Abstützung für den Biegewandler 3 erreicht wird, die diesen an einem Verkippen bzw. Verdrehen um die Längsachse hindert.

Beide Ausführungsvarianten haben noch den weiteren Vorteil, dass sich mit ihnen größere Öffnungsquerschnitte verwirklichen lassen, ohne die Öffnungsabmessungen in der Längsrichtung des Biegewandlers 3 vergrößern zu müssen.

## Patentansprüche

1. Piezoventil, mit einem in einem Ventilgehäuse (1) angeordneten Biegewandler (3), der einenends einen gehäuseseitig gelagerten Lagerungsabschnitt (4) aufweist und der einen frei endenden Arbeitsabschnitt (6) besitzt, der sich in einer Ventilkammer (2) über zwei steuerbare Ventilöffnungen in Gestalt einer Zuströmöffnung (7) und einer Abströmöffnung (8) hinweg erstreckt und durch entsprechende elektrische Ansteuerung in einer Auslenkebene (22) quer zu seiner Längsrichtung auslenkbar ist, um jede der beiden steuerbaren Ventilöffnungen (7, 8) wahlweise zur Verbindung mit einer Arbeitsöffnung (9) freizugeben oder durch Anlage an einem zugeordneten Ventilsitz (26) zu verschließen, **dadurch gekennzeichnet, dass** die beiden steuerbaren Ventilöffnungen (7, 8) auf der gleichen Längsseite des Arbeitsabschnittes (6), in dessen Längsrichtung beabstandet zueinander, angeordnet sind, wobei der Arbeitsabschnitt (6) zwei entsprechend beabstandete, den beiden steuerbaren Ventilöffnungen (7, 8) zugeordnete zuströmseitige bzw. abströmseitige Steuerabschnitte (24, 25) aufweist, und dass an dem Arbeitsabschnitt (6) im Bereich des zuströmseitigen Steuerabschnittes (24) zusätzlich zum Biegewandler (3) vorgesehene Beaufschlagungsmittel (27) angreifen, durch die der zuströmseitige Steuerabschnitt (24) ständig in Richtung zu seiner Schließstellung beaufschlagt ist, wobei die Beaufschlagungskraft hoch genug ist, um den zuströmseitigen Steuerabschnitt (24) bei in der Freigabestellung befindlichem abströmseitigen Steuerabschnitt (25) in der Schließstellung zu halten.

2. Piezoventil nach Anspruch 1, **dadurch gekennzeichnet, dass** die Zuströmöffnung (7) zwischen dem Lagerungsabschnitt (4) und der Abströmöffnung (8) platziert ist.

3. Piezoventil nach Anspruch 1, **dadurch gekennzeichnet, dass** die Abströmöffnung (8) zwischen dem Lagerungsabschnitt (4) und der Zuströmöffnung (7) platziert ist.

4. Piezoventil nach einem der Ansprüche 1 bis 3, **dadurch gekennzeichnet, dass** der Biegewandler (3) so ausgebildet und angeordnet ist, dass im elektrisch spannungslosen Neutralzustand beide Steuerabschnitte (24, 25) in Bezug auf die ihnen jeweils zugeordnete steuerbare Ventilöffnung (7, 8) die Schließstellung einnehmen, wobei der Biegewandler (3) derart elektrisch ansteuerbar ist, dass sein Arbeitsabschnitt (6) ausgehend vom Neutralzustand wahlweise in der einen oder anderen Richtung eine Auslenkkraft erfährt.

5. Piezoventil nach Anspruch 4, **dadurch gekennzeichnet, dass** der Biegewandler (3) im Neutralzustand eine zumindest im Wesentlichen lineare Erstreckung aufweist, wobei seine Längsachse (28) im Wesentlichen parallel zu einer die Ventilsitze (26) der beiden steuerbaren Ventilöffnungen (7, 8) enthaltenden Ventilsitzebene (32) ausgerichtet ist.

6. Piezoventil nach einem der Ansprüche 1 bis 3, **dadurch gekennzeichnet, dass** der Biegewandler (3) so ausgebildet und angeordnet ist, dass im elektrisch spannungslosen Neutralzustand der eine Steuerabschnitt die Schließstellung und der andere Steuerabschnitt die Freigabestellung einnimmt.

7. Piezoventil nach Anspruch 6, **dadurch gekennzeichnet, dass** der Biegewandler (3) im Neutralzustand eine zumindest im Wesentlichen lineare Erstreckung aufweist, wobei seine Längsachse (28) bezüglich einer die Ventilsitze (26) der beiden steuerbaren Ventilöffnungen (7, 8) enthaltenden Ventilsitzebene (32) einen geneigten Verlauf hat.

8. Piezoventil nach einem der Ansprüche 1 bis 7, **dadurch gekennzeichnet, dass** die Lagerstelle (5) für den Lagerungsabschnitt (4) des Biegewandlers (3) in der Auslenkebene (22) quer zur Längsrichtung des Biegewandlers (3) justierbar ist.

9. Piezoventil nach Anspruch 8 in Verbindung mit Anspruch 7, **dadurch gekennzeichnet, dass** durch entsprechende Justierung der Lagerstelle (5) die im Neutralzustand vorliegende Schrägstellung des Biegewandlers (3) wahlweise so einstellbar ist, dass entweder der eine oder der andere Steuerabschnitt die Schließstellung und der jeweils andere Steuerabschnitt die Freigabestellung einnimmt.

10. Piezoventil nach einem der Ansprüche 1 bis 9, **dadurch gekennzeichnet, dass** die Beaufschlagungsmittel (27) von einer zwischen dem Arbeitsabschnitt (6) und dem Ventilgehäuse (1) wirksamen Federeinrichtung gebildet sind.

11. Piezoventil nach einem der Ansprüche 1 bis 10, **dadurch gekennzeichnet, dass** die Arbeitsöffnung (9) auf der gleichen Längsseite des Biegewandlers (3) wie die steuerbaren Ventilöffnungen (7, 8) angeordnet ist.

12. Piezoventil nach einem der Ansprüche 1 bis 11, **dadurch gekennzeichnet, dass** der Biegewandler (3) an der Lagerstelle (5) bezüglich des Ventilgehäuses (1) verschwenkbar gelagert ist.

13. Piezoventil nach Anspruch 12, **dadurch gekennzeichnet, dass** der Biegewandler (3) an der Lagerstelle (5) über zur Auslenkebene (22) rechtwinkelige, ortsfeste Drehachsmittel (37) verschwenkbar gelagert ist.

14. Piezoventil nach Anspruch 12, **dadurch gekennzeichnet, dass** der Lagerungsabschnitt (4) an der Lagerstelle (5) durch sich am Ventilgehäuse (1) abstützende Federmittel (34) nachgiebig gegen ein ventilgehäusefestes Widerlager (35) gedrückt wird.

15. Piezoventil nach Anspruch 14, **dadurch gekennzeichnet, dass** das Widerlager (35) relativ zum Ventilgehäuse (1) justierbar ist.

16. Piezoventil nach Anspruch 14 oder 15, **dadurch gekennzeichnet, dass** das Widerlager (35) einen punktuellen oder zur Auslenkebene rechtwinkeligen, linienförmigen Widerlagerabschnitt (42, 43) definiert, an dem der Lagerungsabschnitt (4) des Biegewandlers (3) anliegt.

17. Piezoventil nach einem der Ansprüche 1 bis 16, **dadurch gekennzeichnet, dass** mindestens eine der beiden steuerbaren Ventilöffnungen (7, 8) einen Öffnungsquerschnitt mit rechtwinkelig zur Auslenkebene (22) länglicher Gestalt aufweist.

18. Piezoventil nach einem der Ansprüche 1 bis 17, **dadurch gekennzeichnet, dass** mindestens eine der beiden steuerbaren Ventilöffnungen (7, 8) von mehreren, rechtwinkelig zur Auslenkebene (22) nebeneinander angeordneten Einzelöffnungen gebildet ist.

## Claims

1. Piezoelectric valve, with a bending transducer (3) located in a valve casing (1), having at one end a mounting section (4) mounted on the casing side, and with a freely ending operating section (6) which extends into a valve chamber (2) via two controllable valve ports in the form of an inflow port (7) and an outflow port (8), and may be deflected by means of suitable electrical activation into a deflection plane (22) at right-angles to its longitudinal direction in order to open each of the two controllable valve ports (7, 8) alternately to connect with an operating port (9), or to close them through contact with an assigned valve seat (26), **characterised in that** the two controllable valve ports (7, 8) are located on the same long side of the operating section (6), spaced apart in its longitudinal direction, wherein the operating section (6) has two correspondingly spaced apart inflow-side and outflow-side control sections (24, 25) assigned to the two controllable valve ports (7, 8), and that pressure-loading means (27) provided in addition to the bending transducer (3) act on the operating section (6) in the area of the inflow-side control section (24), pressing the inflow-side control section (24) constantly towards its closed position, wherein the pressurising force is high enough to keep the inflow-side control section (24) in the closed position when the outflow-side control section (25) is in the open position.

2. Piezoelectric valve according to claim 1, **characterised in that** the inflow port (7) is located between the mounting section (4) and the outflow port (8).

3. Piezoelectric valve according to claim 1, **characterised in that** the outflow port (8) is located between the mounting section (4) and the inflow port (7).

4. Piezoelectric valve according to any of claims 1 to 3, **characterised in that** the bending transducer (3) is so designed and arranged that, in the electrically dead neutral state, both control sections (24, 25) adopt the closed position relative to their respectively assigned controllable valve port (7, 8), while the bending transducer (3) may be so electrically activated that its operating section (6), starting from the neutral state, undergoes a deflection force alternately in one or the other direction.

5. Piezoelectric valve according to claim 4, **characterised in that** in the neutral state the bending transducer (3) has an extent which is at least substantially linear, wherein its longitudinal axis (28) is aligned substantially parallel to one of the valve seats (26) of the valve seat plane (32) containing the two controllable valve ports (7, 8).

6. Piezoelectric valve according to any of claims 1 to 3, **characterised in that** the bending transducer (3) is so designed and arranged that, in the electrically dead neutral state, one control section adopts the closed position and the other control section adopts the open position.

7. Piezoelectric valve according to claim 6, **characterised in that** in the neutral state the bending transducer (3) has an extent which is at least substantially linear, wherein its longitudinal axis (28) is inclined relative to one of the valve seats (26) of the valve seat plane (32) containing the two controllable valve ports (7, 8).

8. Piezoelectric valve according to any of claims 1 to 7, **characterised in that** the bearing point (5) for the mounting section (4) of the bending transducer (3) is adjustable in the deflection plane (22) at right-angles to the longitudinal direction of the bending transducer (3).

9. Piezoelectric valve according to claim 8 in combination with claim 7 **characterised in that**, by suitable adjustment of the bearing point (5), the inclined position of the bending transducer (3) in the neutral state may be so adjusted alternately that one or the other control section adopts the closed position and the other respective control section adopts the open position.

10. Piezoelectric valve according to any of claims 1 to 9, **characterised in that** the pressure-loading means (27) are formed by a spring device acting between the operating section (6) and the valve casing (1).

11. Piezoelectric valve according to any of claims 1 to 10, **characterised in that** the operating port (9) is located on the same long side of the bending transducer (3) as the controllable valve ports (7, 8).

12. Piezoelectric valve according to any of claims 1 to 11, **characterised in that** the bending transducer (3) is pivotably mounted at the bearing point (5), relative to the valve casing (1).

13. Piezoelectric valve according to claim 12, **characterised in that** the bending transducer (3) is pivotably mounted at the bearing point (5) via stationary rotary axis means (37) at right-angles to the deflection plane (22).

14. Piezoelectric valve according to claim 12 **characterised in that**, at the bearing point (5), the mounting section (4) is pressed resiliently by spring means (34) supported on the valve casing (1) against an abutment (35) secured to the valve casing.

15. Piezoelectric valve according to claim 14, **characterised in that** the abutment (35) is adjustable relative to the valve casing (1).

16. Piezoelectric valve according to claim 14 or 15, **characterised in that** the abutment (35) defines an abutment section (42, 43) which is punctiform or linear at right-angles to the deflection plane and with which the mounting section (4) of the bending transducer (3) makes contact.

17. Piezoelectric valve according to any of claims 1 to 16, **characterised in that** at least one of the two controllable valve ports (7, 8) has a port cross-section of oblong shape at right-angles to the deflection plane (22).

18. Piezoelectric valve according to any of claims 1 to 17, **characterised in that** at least one of the two controllable valve ports (7, 8) has several individual ports adjacent to one another at right-angles to the deflection plane (22).

## Revendications

1. Soupape piézoélectrique avec un transducteur de flexion (3) placé dans un boîtier de soupape (1), transducteur qui présente à une extrémité une section d'appui (4) soutenue dans le boîtier et qui possède une section de travail (6) se terminant librement, qui s'étend dans une chambre de soupape (2) sur deux ouvertures de soupape commandables prenant la forme d'une ouverture d'admission (7) et d'une ouverture d'évacuation (8) et qui, par une commande électrique appropriée, peut être déviée dans un plan de déviation (22) transversalement à sa direction longitudinale afin de libérer au choix chacune des deux ouvertures de soupape commandables (7, 8) afin d'établir une liaison avec une ouverture de travail (9) ou de la fermer par appui contre un siège de soupape (26) associé, **caractérisée en ce que** les deux ouvertures de soupape commandables (7, 8) sont placées sur le même côté longitudinal de la section de travail (6) à distance l'une de l'autre dans sa direction longitudinale, dans laquelle la section de travail (6) présente deux sections de commande (24, 25) côté admission resp. côté évacuation espacées de manière correspondante et associées aux deux ouvertures de soupape commandables (7, 8), et **en ce que** sur la section de travail (6) se mettent en prise, au niveau de la section de commande (24) côté admission, des moyens de sollicitation (27) prévus en plus du transducteur de flexion (3), par l'intermédiaire desquels la section de commande (24) côté admission est constamment sollicitée en direction d'une position de fermeture, la force de sollicitation étant suffisamment grande pour tenir la section de commande (24) côté admission dans la position de fermeture quand la section de commande (25) côté évacuation se trouve dans la position d'ouverture.

2. Soupape piézoélectrique selon la revendication 1, **caractérisée en ce que** l'ouverture d'admission (7) est placée entre la section d'appui (4) et l'ouverture d'évacuation (8).

3. Soupape piézoélectrique selon la revendication 1, **caractérisée en ce que** l'ouverture d'évacuation (8) est placée entre la section d'appui (4) et l'ouverture d'admission (7).

4. Soupape piézoélectrique selon l'une des revendications 1 à 3, **caractérisée en ce que** le transducteur de flexion (3) est conformé et disposé de sorte que, à l'état neutre sans tension électrique, les deux sections de commande (24, 25) prennent la position de fermeture par rapport à l'ouverture de soupape (7, 8) qui leur est respectivement associée, le transducteur de flexion (3) pouvant être commandé électriquement de telle sorte que sa section de travail (6) subisse une force de déviation au choix dans l'une ou l'autre direction depuis l'état neutre.

5. Soupape piézoélectrique selon la revendication 4, **caractérisée en ce que** le transducteur de flexion (3) présente à l'état neutre une projection au moins sensiblement rectiligne, son axe longitudinal (28) étant orienté pour l'essentiel parallèlement à un plan de sièges de soupape (32) contenant les sièges de soupape (26) des deux ouvertures de soupape commandables (7, 8).

6. Soupape piézoélectrique selon l'une des revendications 1 à 3, **caractérisée en ce que** le transducteur de flexion (3) est conformé et disposé de sorte que, à l'état neutre sans tension électrique, une section de commande se place dans la position de fermeture et l'autre section de commande se place dans la position d'ouverture.

7. Soupape piézoélectrique selon la revendication 6, **caractérisée en ce que** le transducteur de flexion (3) présente à l'état neutre une projection au moins sensiblement rectiligne, son axe longitudinal (28) présentant une inclinaison par rapport à un plan de sièges de soupape (32) contenant les sièges de soupape (26) des deux ouvertures de soupape commandables (7, 8).

8. Soupape piézoélectrique selon l'une des revendications 1 à 7, **caractérisée en ce que** le point d'appui (5) de la section d'appui (4) du transducteur de flexion (3) est ajustable dans le plan de déviation (22) transversalement à la direction longitudinale du transducteur de flexion (3).

9. Soupape piézoélectrique selon la revendication 8, **caractérisée en ce que**, par un ajustement correspondant du point d'appui (5), la position inclinée du transducteur de flexion (3) à l'état neutre peut être réglée au choix de sorte que l'une ou l'autre section de commande se place dans la position de fermeture et l'autre section de commande dans la position d'ouverture.

10. Soupape piézoélectrique selon l'une des revendications 1 à 9, **caractérisée en ce que** les moyens de sollicitation (27) sont formés par un dispositif à ressort actif entre la section de travail (6) et le boîtier de soupape (1).

11. Soupape piézoélectrique selon l'une des revendications 1 à 10, **caractérisée en ce que** l'ouverture de travail (9) est placée du même côté longitudinal du transducteur de flexion (3) que les ouvertures commandables (7, 8).

12. Soupape piézoélectrique selon l'une des revendications 1 à 11, **caractérisée en ce que** le transducteur de flexion (3) est monté pivotant sur le point d'appui (5) par rapport au boîtier de soupape (1).

13. Soupape piézoélectrique selon la revendication 12, **caractérisée en ce que** le transducteur de flexion (3) est monté pivotant au point d'appui (5) par l'intermédiaire de moyens à axe de rotation (37) fixes perpendiculaires au plan de déviation (22).

14. Soupape piézoélectrique selon la revendication 12, **caractérisée en ce que** la section d'appui (4) est ajustable élastiquement au point d'appui (5) contre un contre-appui (35) solidaire du boîtier de soupape, par des moyens à ressort (34) s'appuyant sur le boîtier de soupape (1).

15. Soupape piézoélectrique selon la revendication 14, **caractérisée en ce que** le contre-appui (35) est ajustable par rapport au boîtier de soupape (1).

16. Soupape piézoélectrique selon la revendication 14 ou 15, **caractérisée en ce que** le contre-appui (35) définit une section de contre-appui (42, 43) ponctuelle ou linéaire, perpendiculaire au plan de déviation, contre laquelle s'appuie la section d'appui (4) du transducteur de flexion (3).

17. Soupape piézoélectrique selon l'une des revendications 1 à 16, **caractérisée en ce qu'**au moins l'une des deux ouvertures commandables (7, 8) présente une section d'ouverture de forme oblongue perpendiculairement au plan de déviation (22).

18. Soupape piézoélectrique selon l'une des revendications 1 à 17, **caractérisée en ce qu'**au moins l'une des deux ouvertures de soupape commandables (7, 8) est formée de plusieurs ouvertures distinctes juxtaposées perpendiculairement au plan de déviation (22).
